Europäisches Patentamt

European Patent Office

Office européen des brevets

(11) Numéro de publication: **0 239 708 B1**

(12) **FASCICULE DE BREVET EUROPEEN**

(45) Date de publication de fascicule du brevet:
**10.04.91**

(51) Int. Cl.⁵: **A23L 3/04**

(21) Numéro de dépôt: **86420294.0**

(22) Date de dépôt: **27.11.86**

(54) **Dispositif de pasteurisation de produits alimentaires contenus dans des récipients.**

(30) Priorité: **04.03.86 FR 8603613**

(43) Date de publication de la demande:
**07.10.87 Bulletin 87/41**

(45) Mention de la délivrance du brevet:
**10.04.91 Bulletin 91/15**

(84) Etats contractants désignés:
**DE ES GB IT**

(56) Documents cités:
**FR-A- 602 749**
**FR-A- 1 112 674**
**GB-A- 377 361**

(73) Titulaire: **Société GANGLOFF**
**10 rue Pierre Timbaud**
**F-69200 Venissieux(FR)**

(72) Inventeur: **Braymand, Robert**
**654, rue François Giraud**
**F-69400 Villefranche-sur-Saône(FR)**

(74) Mandataire: **Maureau, Philippe**
**Cabinet Germain & Maureau Le Britannia -
Tour C 20, bld Eugène Déruelle Boîte Postale 3011**
**F-69392 Lyon Cédex 03(FR)**

## Description

La présente invention se rapporte à la pasteurisation de produits alimentaires contenus dans des récipients, tels que par exemple des bouteilles ou des boîtes métalliques.

On connaît des dispositifs, appelés pasteurisateurs à tunnel, permettant la pasteurisation de produits alimentaires contenus dans des récipients par traversée par ceux-ci d'un tunnel de pasteurisation dans lequel sont normalement réalisées successivement une phase de réchauffement procurant une montée régulière de température au cours de laquelle s'effectue un préchauffage, puis un chauffage accéléré dans une zone dite de prépasteurisation, puis une phase de maintien à température palier dans une zone dite de pasteurisation, et enfin une phase de refroidissement dans une zone de refroidissement, ledit tunnel de pasteurisation étant équipé de rampes d'arrosage des récipients par un liquide d'arrosage à température déterminée pour chaque rampe ou groupe de rampes successives, la température du liquide d'arrosage définissant la phase ou zone de préchauffage, prépasteurisation, pasteurisation, ou refroidissement, et étant équipé par ailleurs d'un dispositif de récupération et recyclage du liquide d'arrosage de chaque rampe ou groupe de rampes successives à même température d'arrosage.

Ces dispositifs connus ont pour inconvénient d'avoir des zones d'arrosage bien définies et figées en position dans le tunnel, même si l'on peut jouer sur les températeures, alors que pout certaines applications il serait souhaitable de moduler à volonté, et surtout à distance par commande programmée, la longueur et la position d'une ou plusieurs zones, en particulier de la zone de pasteurisation.

Le pasteurisateur à tunnel conforme à l'invention ne présente pas ce genre d'inconvénient. Il est caractérisé en ce que les rampes d'arrosage successives définissant dans leur ensemble les zones successives de prépasteurisation, pasteurisation, et éventuellement de début de la zone de refroidissement son alimentées chacune en liquide d'arrosage par au moins un tube distributeur, ou analogue, commun et s'étendant dans le sens d'avancée des récipients, ledit tube distributeur commun étant pourvu de vannes, fonctionnant en tout-ou-rien et commandables à distance, permettant d'isoler des morceaux de tube distributeur successifs alimentant chacun au moins une rampe d'arrosage, ce tube distributeur étant alimentable en liquide à température de prépasteurisation à son extrémité amont, en liquide à températeure de refroidissement à son extrémitré aval, et en liquide à température de pasteurisation sur un ou plusieurs morceaux médians, sélectionnables par vannes d'alimentation, de manière à pouvoir déplacer, en grandeur et position, la zone de pasteurisation entre les zones de prépasteurisation et de refroidissement, en jouant sur la fermeture et l'ouverture desdites vannes.

Avantageusement par ailleurs, le pasteurisateur à tunnel de l'invention est en outre caractérisé en ce qu'il comporte, pour chacune des zones alimentées par ledit tube distributeur, un réservoir de liquide à température d'arrosage pour la zone associée, et en ce qu'il comporte par ailleurs un dispositif de récupération du liquide d'arrosage en provenance de chacun desdits morceaux de tube distributeur comportant également au moins un collecteur, tubulaire ou analogue, commun et s'étendant dans le sens d'avancée des récipients, ledit tube collecteur commun étant, de la même façon que pour le tube distributeur, pourvu de vannes fonctionnant en tout-ou-rien et commandables à distance, permettant de diviser en fonction de la température initiale d'arrosage des liquides récupérés, ledit collecteur en portions successives de liquide récupéré en provenance des rampes de ladite zone de prépasteurisation éventuelle, puis de ladite zone de pasteurisation éventuelle, puis dudit début de zone de refroidissement éventuelle, et enfin en ce qu'il est équipé de moyens permettant de diriger le liquide recueilli respectivement dans ces morceaux successifs vers ledit réservoir de liquide à température d'arrosage pour la zone correspondante.

Selon une forme préférentielle d'exécution, le liquide d'arrosage en provenance de chacune desdites rampes relatives auxdits morceaux de tube distributeur est recueilli par des gouttières transversales, ou analogue, placées sous les récipients, de chacune desquelles il s'écoule par gravité dans un desdits morceaux dudit tube collecteur commun.

Avantageusement dans ce cas, le liquide, recueilli dans la portion amont dudit tube collecteur, s'écoule par son extrémité amont vers le réservoir pour la zone de prépasteurisation, le liquide receuille dans la portion aval dudit tube collecteur s'écoule par son extrémité aval vers le réservoir pour ledit début de zone de refroidissement, et la portion médiane est équipée de moyens permettant de diriger le liquide recueilli dans celle-ci vers le réservoir pour la zone de pasteurisation. Ces moyens sont soit des moyens de débordement, soit des moyens classiques d'écoulement libérables par vanne(s).

Enfin, selon une autre caractéristiques avantageuse de l'invention, le pasteurisateur est tel que le tube distributeur commun et le tube collecteur commun comportent chacun un même nombre de vannes, de rang I à n, et est équipé de moyens permettant de commander simultanément et de la même manière (ouverte ou fermée) les deux vannes de même rang (1, ou 2, ou..., ou n) sur le tube distributeur d'une part et sur le tube collecteur d'autre part, de manière que les portions successives du tube distributeur aient les mêmes positions et dimensions relatives que le tube collecteur.

L'invention sera mieux comprise à l'aide de la description suivante d'un exemple de réalisation, en référence aux dessins annexés dans lesquels :

Figure 1 est une vue partielle schématique en perspective partiellement écorchée d'un pasteurisateur selon l'invention, d'un modèle très simplifié,

Figure 2 est une vue schématique, en coupe axiale et longitudinale, d'un pasteurisateur conforme à l'invention, d'un modèle plus élaboré,

Figure 3 est une vue partielle très schématique, en coupe transversale, du pasteurisateur de la figure 2,

Figure 4 est une vue de dessus partielle et très schématique du pasteurisateur des figures 2 et 3.

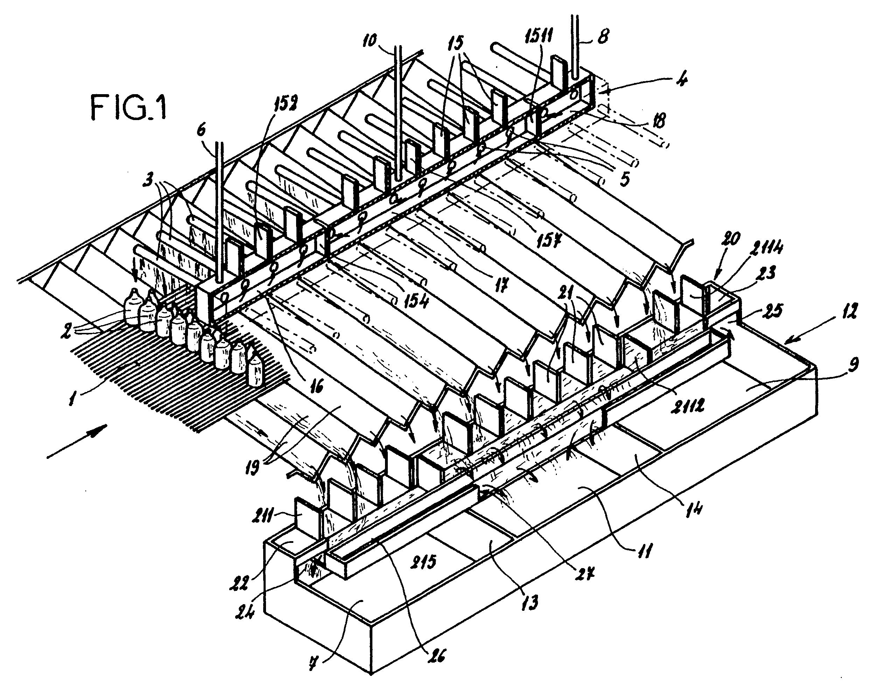

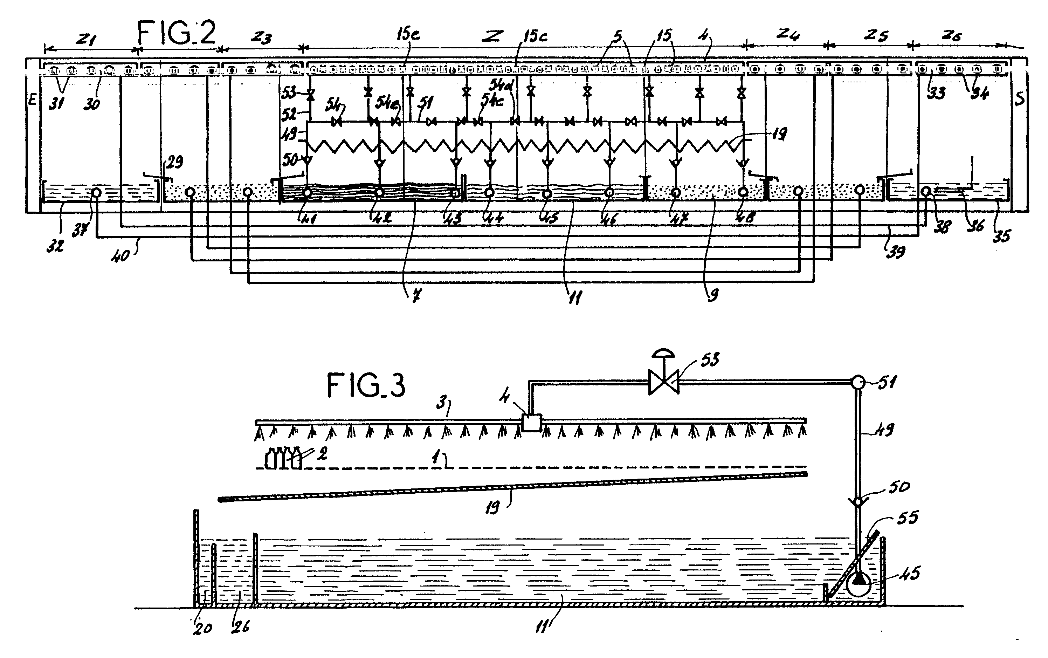

En se reportant tout d'abord à la figure 1, on a représenté partiellement la partie centrale d'un pasteurisateur à tunnel conforme à l'invention. Ce pasteurisateur et ses éléments fonctionnels ont étés simplifiés au maximum pour faciliter la compréhension, de sorte que le schéma de la figure 1 est plutôt un schéma de principe, indispensable pour faciliter la compréhension, qu'un schéma plus réel de mise en oeuvre pratique, un tel schéma étant donné ci-après en référence aux figures 2 à 4.

On a désigné sur cette figure par la référence 1 le transporteur sur lequel les bouteilles 2 à pasteuriser se déplacent dans le sens indiqué par la flèche c'est-à-dire de gauche à droite sur le dessin. De manière classique, le pasteurisateur est équipé de rampes transversales d'arrosage 3, projetant sur les bouteilles 2 de l'eau à une température bien déterminée.

Chaque rampe d'arrosage 3 est alimentée en eau à partir d'un tube distributeur central unique 4, disposé selon l'axe longitudinal de la machine, de section carrée dans l'exemple considéré, fermé à ses deux extrémités et garni d'ouvertures latérales 5 d'alimentation en eau de chaque rampe.

Le tube distributeur 4 est lui-même alimenté :

- vers son extrémité amont, et par une tubulure 6, en eau de prépasteurisation, par exemple à 70° C, en provenance d'un réservoir 7 d'eau de prépasteurisation, situé dans cet exemple dans le bas et à droite du pasteurisateur ;

- vers son extrémité aval, et par une tubulure 8, en eau de refroidissement, par exemple à 45° C, en provenance d'un réservoir 9 d'eau de refroidissement, situé également sur le côté inférieur droit du pasteurisateur ;

- en son milieu, et par une tubulure 10, en eau de pasteurisation, par exemple à 60° C, en provenance d'un réservoir 11 d'eau de pasteurisation, situé au même endroit que les deux autres.

En fait, comme on le voit sur le dessin, les trois réservoirs 7,11 et 9 sont contigus et situés dans un même bac allongé 12, séparé en trois réservoirs 7,11,9 par deux cloisons tranversales 13 et 14.

Bien entendu, et de manière connue, chacun des réservoirs 7,11,9 est alimenté en eau froide et/ou en vapeur d'eau de façon à y établir et/ou maintenir la température souhaitée, respectivement dans notre exemple 70° C, 60° C, et 45° C. Par ailleurs, les tubulures 6, 10 et 8 sont chacune alimentées à partir du réservoir 7,11,9 associé à partir d'une pompe hydraulique classique. Les dispositifs d'injection d'eau froide et de vapeur, ainsi que les pompes hydrauliques, n'ont pas été représentés sur le dessin simplifié de la figure 1.

Conformément à l'invention, chaque orifice 5 d'alimentation en eau d'une rampe 3 est séparé de l'orifice voisin par une vanne 15 commandée à distance, telle qu'une électrovanne. Pour bien matérialiser les choses, les vannes 15 ont été représentées sous la forme de vannes de type batardeau. Dans l'example représenté au dessin, les trois premières vannes, de l'amont vers l'aval, sont ouvertes, la quatrième vanne 154 est fermée, les six vannes suivantes sont ouvertes, la onzième vanne 1511 est fermée, et la douzième vanne est ouverte.

Dans les positions des vannes 15 ainsi définies, on voit que le tube distributeur 4 est divisé, par les vannes 154 et 1511, en trois zones :

- une première zone 16 alimentée en eau de prépasteurisation à 70° C par le tube 6 et à partir du réservoir 7,

- une deuxième zone 17 centrale alimentée en eau de pasteurisation à 60° C par le tube 10 et à partir du réservoir 11,

- une troisième zone 18 alimentée en eau de refroidissement à 45° C par le tube 8 et à partir du réservoir 9.

On voit d'ores et déjà que la longueur des trois zones est modulable en jouant sur les douze vannes 15. Par exemple, on peut en ouvrant la vanne 1511, en fermant la septième vanne 157, en ouvrant la vanne 154 et en fermant la deuxième vanne 152, obtenir une grande zone de refroidissement 18, une zone de prépasteurisation 17 déplacée vers la gauche et un peu plus petite, et une zone de pasteurisation 16 deux fois plus petite.

Sous le transporteur 1, portant les bouteilles 2, est installée une série 19 de gouttières à section en V. Le fond de chaque gouttière étant la verticale de chaque rampe 3 et en alignement avec la rampe correspondante, comme on le voit sur le dessin. Les gouttières 9 sont donc transversales et orthogonales au tube distributeur 4, et elles sont par ailleurs légèrement inclinées vers la gauche en direction du bac 12 destiné à recevoir les eaux d'arrosage récupérées.

Comme on le voit sur le dessin, les eaux s'écoulant en bout de chaque gouttière 19 tombent dans un bac récupérateur allongé, que l'on appellera "tube collecteur" 20, ou collecteur, de section carrée et ouvert vers le haut. Le tube collecteur 20 est équipé de vannes 21 commandables à distance, de même fonction que les vannes 15, et en outre de même position relative sur le tube collecteur 20 que les vannes 15 sur le tube distributeur 4. Le tube collecteur 20 a donc substantiellement la même longueur que le tube distributeur 4 et substantiellement le même nombre de vannes le divisant en morceaux de même longueur. En fait, dans l'exemple considéré, le tube 20 est plus long, de la valeur d'un morceau de chaque côté, que le tube 4, et il est fermé, pour sa partie centrale de même longueur que celle du tube 4, par les deux vannes d'extrémité 211 et 2114.

Comme on le voit sur le dessin, les deux extrémités supplémentaires 22 et 23 du tube collecteur 20 débouchent directement respectivement dans le réservoir 7 et dans le réservoir 9 par des ouvertures de communication 24 et 25. Par ailleurs, le côté latéral droit du tube 20 est, dans sa partie centrale comprise entre les vannes 211 et 2114, légèrement moins haut que les autres côtés. Cette différence de hauteur permet à l'eau, contenue dans le tube 20 entre deux vannes fermées 215 et 2112, de s'écouler par débordement par un second bac allongé 26 également ouvert sur le dessus, de hauteur par exemple égale à la hauteur latérale réduite précitée du bac 12, et ouvert en son centre vers le réservoir 11 suivant une ouverture centrale 27.

Conformément à l'invention, les vannes 21 sont homologues des vannes 15 non seulement en positions relatives dans l'espace, mais encore en positions relatives d'ouverture et de fermeture. En conséquence, comme on le voit sur le dessin, la cinquième vanne 215, homologue de la quatrième vanne 154 du tube 4, est fermée, la douzième vanne 2112 homologue de la vanne 1511 est fermée, et toutes les autres vannes sont ouvertes. On remarquera néanmoins que les deux vannes supplémentaires d'extrémité 2111 et 2114 du tube 20 sont ouvertes dans ce cas de figure pour permettre l'écoulement du liquide récupéré vers les espaces d'extrémité 22 et 23 et donc vers les réservoirs 7 et 9.

Le fonctionnement du dispositif représenté sur la figure 1 est le suivant :

Les vannes étant toutes dans les positions représentées, les rampes 3 sont alimentées en eau de prépasteurisation, de pasteurisation, et de refroidissement, conformément aux zones 16,17,18, ci-dessus définies et délimitées par les vannes 154 et 1511. L'eau d'arrosage de chaque rampe 3 est récupérée sous les bouteilles 2 dans le fond de la gouttière 19 correspondante. De là, ces eaux s'écoulent dans le collecteur 20, respectivement en deux vannes 21 homologues des deux vannes 15 attirant la rampe 3 considérée. Les eaux de prépasteurisation relatives à la zone 16 s'écoulent dans la zone amont du tube 20 délimité par la vanne 215. De là, elles s'écoulent naturellement dans le bac 7 par l'ouverture 24. De même, les eaux de refroidissement relatives à la zone 18 s'écoulent naturellement dans la dernière portion aval du tube 20 commençant après la vanne 2112. De là, elles s'écoulent naturellement dans le bac 9 par l'ouverture 25. Enfin, les eaux de pasteurisation relatives à la zone 17 s'écoulent dans la portion médiane du tube collecteur 20 délimité par les deux vannes fermées 215 et 2112. Elles finissent alors par déborder de cette portion médiane dans le bac adjacent 26, duquel elles s'écoulent naturellement dans le bac 11 par l'ouverture 27. Comme déjà mentionné ci-dessus, ces bacs 7,11,9 sont maintenus à température constante respectivement, de pasteurisation, de prépasteurisation, et de refroidissement, et des pompes non représentées alimentent respectivement les tubes 6,10,8 à partir de chacun de ces trois bacs respectivement.

On se reportera maintenant aux figures 2,3,4 qui représentent partiellement et schématiquement un exemple pratique plus réel de réalisation de l'invention, étant bien entendu que ce pasteurisateur fonctionne sur le même principe que le pasteurisateur simplifié de la figure 1.

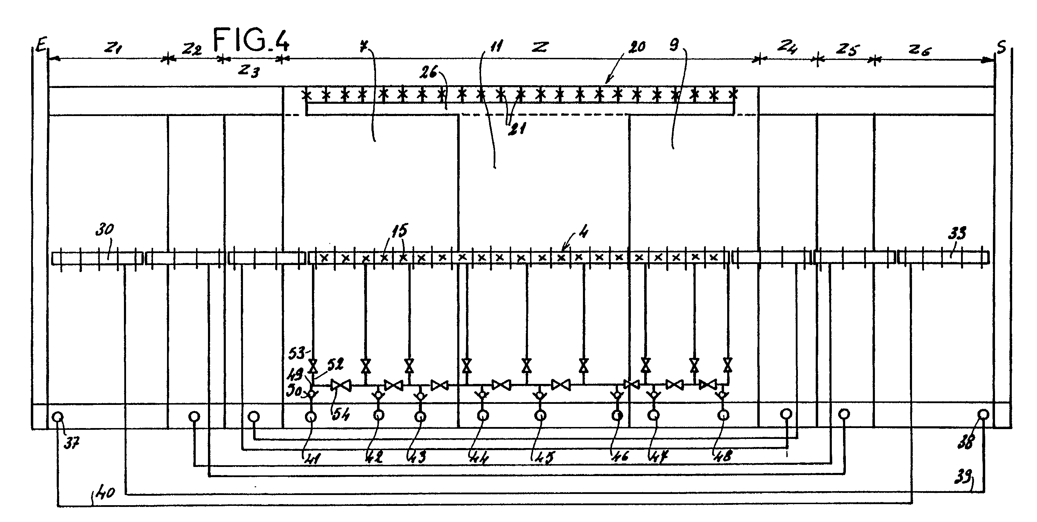

Comme on le voit sur les figures 2 et 4, les bouteilles entrent dans le pasteurisateur en E et en sortent en S. Avant d'atteindre la zone centrale Z du pasteurisateur, seule concernée par l'invention, les bouteilles passent, en amont et en aval de cette zone respectivement, par trois zones successives de chauffage $Z_1$, $Z_2$, $Z_3$, et par trois zones successives de refroidissement $Z_4$, $Z_5$, $Z_6$. Le fonctionnement de ces six zones $Z_1$ à $Z_6$ est très classique et sera donc rappelé ici très brièvement.

La zone $Z_1$ est composée d'un tube distributeur 30 portant des rampes d'arrosage 31, et d'un bac de récupération 32 des eaux d'arrosage en provenance des rampes 31. De même, la dernière zone de refroidissement $Z_6$ comporte, de manière homologue à la zone $Z_1$. un tube distributeur 33 garni de rampes 34, ainsi qu'un bac de récupération 35. Chaque bac de récupération possède un dispositif 36 classique d'injection d'eau froide ou de vapeur d'eau selon le cas. Chaque bac 32 et 35 est associé à une pompe hydraulique 37 et 38 placée dans celui-ci. Comme il est bien connu dans la technique, la pompe 38 du bac 35 alimente par une tubulure 39 le tube distributeur 30 de la zone $Z_1$, et réciproquement la pompe 37 du bac 32 alimente par un tube 40 le distributeur 33 de la zone $Z_6$. il se trouve en effet, comme on le sait, que l'eau récupérée dans le bac 35 a exactement la température nécessaire pout alimenter le distributeur 30 de la zone 1, et vice-versa. Il en est de même, toujours de manière classique pour les zones associées $Z_2$, $Z_5$ et $Z_3$, $Z_4$. Toujours de manière très classique, lorsque les distributeurs ne sont pas entièrement à la verticale du bac de récupération correspondant, des gouttières 29 sont prévues pour ramener les eaux récupérées dans le bac adéquat.

La zone Z centrale, objet de l'invention, est très semblable à celle de la figure 1, et les éléments correspondant à ceux de cette figure y ont été désignés par les mêmes chiffres de référence pour faciliter la compréhension. On reconnaît en particulier le tube distributeur 4, les orifices 5, les rampes d'arrosage 3, les vannes 15, les gouttières de récupération 19, le "tube" collecteur 20, son "tube" accolé 26, et les réservoirs 7,11,9.

Le réservoir 7 d'eau de prépasteurisation comporte trois pompes hydrauliques 41,42,43. De même, le réservoir 11 comporte trois pompes hydrauliques 44,45,46, et le réservoir 12 comporte deux pompes hydrauliques 47,48.

Chacune de ces pompes est reliée par chacune une tubulure 49 comportant une valve anti-retour 50, à un premier tube distributeur commun intermédiaire 51. De ce tube longitudinal 51 partent deux tubulures 52 alimentant en eau le distributeur 4 en plusieurs endroits de celui-ci, comportant les extrémités amont et aval, et des points espacés de deux ou trois rampes comme représenté. Par ailleurs, chaque tubulure 52 est munie d'une électrovanne 53, et le tube commun 51 est muni d'une électrovanne 54 en chacun de ces points de piquage et d'alimentation, comme on le voit sur le dessin. Comme on le voit par ailleurs sur la figure 3, chaque pompe telle que 45 est associée à un filtre classique 55.

Le fonctionnement du dispositif de pasteurisation des figures 2 à 4 est semblable à celui de la figure 1, mais est plus élaboré. On en décrira ci-après un exemple pratique.

En régime normal de fonctionnement par exemple, on désire que la zone Z soit uniquement divisée, par exemple en une zone de prépasteurisation suivie d'une zone de pasteurisation, des deux zones étant par exemple de même longueur. Pour ce faire, on ouvre toutes les vannes du tube distributeur 4, à l'exception de la vanne centrale 15c. Conformément à l'invention, toutes les vannes du tube collecteur 20 sont ouvertes, à l'exception également de sa vanne centrale. On met en route l'alimentation électrique des pompes 41 à 46 mais pas celle des pompes 47 et 48. On ferme la vanne 54c du tube 51 qui est située juste en amont de la pompe 44. On laisse ouvertes toutes les autres vannes 54 et 53. On voit alors que toutes les rampes 3 situées en amont de la vanne 15c sont alimentées à partir du bac 7 en eau de prépasteurisation, tandis que toutes les autres rampes 3 situées en aval de la vanne 15c sont alimentées en eau de pasteurisation à partir du bac 11.

Supposons alors, les conditions de fabrication ayant changé, que l'on désire refroidir toute la dernière moitié de la zone Z, en aval de la vanne 15c par exemple, et que l'on désire protéger le restant de cette zone Z, en amont de la vanne 15c, en deux zones approximativement égales de prépasteurisation et de pasteurisation. Pour ce faire, on met en route les deux pompes 47 et 48, on arête les pompes 45 et 46, on ferme la vanne 54d située juste en amont de la vanne 15c, qui est toujours fermée, on arête la pompe 43, on ferme la vanne 54e située juste en aval de la pompe 42, et on ferme la vanne 15e située juste en aval de la vanne 54e, ainsi que bien évidemment sa vanne 21 associée non visible sur ce dessin. On constate alors que le tube 4 est bien alimenté tel que désiré et défini ci-dessus. En jouant sur les pompes 41 à 48, sur les vannes 53 et 54, et sur les vannes 15 et 21, on peut partager la zone Z en toutes sortes de combinaisons possibles à 1,2 ou 3 zones.

## Revendications

1. Dispositif de pasteurisation de produits alimentaires contenus dans ces récipients (2) par traversée par ceux-ci d'un tunnel de pasteurisation dans lequel sont normalement réalisées successivement une phase de réchauffement procurant une montée régulière de température au cours de laquelle s'effectue un préchauffage, puis un chauffage accéléré dans une zone dite de prépasteurisation, puis une phase de maintien à température palier dans une zone dite de pasteurisation, et enfin une phase de refroidissement dans une zone de refroidissement, ledit tunnel de pasteurisation étant équipé de rampes d'arrosage (3) des récipients par un liquide d'arrosage à température déterminée pour chaque rampe ou groupe de rampes successives, la température du liquide d'arrosage définissant la phase ou zone de préchauffage, prépasteurisation, pasteurisation, ou refroidissement, et étant équipé par ailleurs d'un dispositif de récupération et recyclage du liquide d'arrosage de chaque rampe ou groupe de rampes successives à même température d'arrosage,

caractérisé en ce que les rampes d'arrosage successives (3) définissant dans leur ensemble les zones successives de prépasteurisation, pasteurisation, et éventuellement de début de la zone de refroidissement sont alimentées chacune en liquide d'arrosage par au moins un tube distributeur (4), ou analogue, commun s'étendant dans le sens d'avancée des récipients, ledit tube distributeur commun étant pourvu de vannes (15), fonctionnant en tout-ou-rien et commandables à distance, permettant d'isoler, entre vannes successives, des morceaux de tube distributeur successifs alimentant chacun au moins une rampe d'arrosage (3), tube distributeur étant alimentable en liquide à température de prépasteurisastion à son extrémité amont, en liquide à température de refroidissement à son extrémité aval, et en liquide à température de pasteurisation sur un ou plusieurs morceaux médians, sélectionnables par vannes d'alimentation (15), de manière à pouvoir déplacer, en grandeur et position, la zone de pasteurisation (17) entre les zones de prépasteurisation (16) et de refroidissement (18), en jouant sur la fermeture et l'ouverture desdites vannes.

2. Dispositif de pasteurisation selon la revendication 1, caractérisé en ce qu'il comporte, pour chacune des zones (16, 17, 18) alimentées par ledit tube distributeur commun, un réservoir de liquide (7, 11, 9) à température d'arrosage pour la zone associée, et en ce qu'il comporte un dispositif (19, 20) de récupération du liquide d'arrosage en provenance de chacun desdits morceaux de tube distributeur comportant également au moins un collecteur (20), tubulaire ou analogue, commun et s'étendant dans le sens d'avancée des récipients, ledit collecteur commun étant, de la même façon que pour le tube distributeur, pourvu de vannes (21) fonctionnant en tout-ou-rien et commandables à distance, permettant de diviser en fonction de la température initiale d'arrosage des liquides récupérés, ledit collecteur en portions successives correspondant chacune au liquid récupéré en provenance des rampes de chaque zone et en ce qu'il est équipé de moyens (22 à 27) permettant de diriger le liquide recueilli respectivement dans ces morceaux successifs vers ledit réservoir de liquide (7, 11, 9) à température d'arrosage pour la zone correspondante.

3. Dispositif de pasteurisation selon la revendication 2, caractérisé en ce que le liquide d'arrosage en provenance de chacune desdites rampes relatives auxdits morceaux de tube distributeur est receuilli par des gouttières transversales (19), ou analogue, placées sous les récipients (2), et de chacune dequelles il s'écoule par gravité dans un desdits morceaux dudit tube collecteur commun.

4. Dispositif de pasteurisation selon la revendication 2 ou la revendication 3, caractérisé en ce que le liquide recueilli dans la portion amont dudit collecteur (20) s'écoule par son extrémité amont vers le réservoir (7) pour la zone de prépasteurisation, en ce que le liquide recueilli dans la portion aval dudit collecteur s'écoule par son extrémité aval vers le réservoir (9) pour ledit début de zone de refroidissement, et la portion médiane est équipée de moyens (26, 27) permettant de diriger le liquide recueilli dans celle-ci vers le réservoir (11) pour la zone de pasteurisation.

5. Dispositif de pasteurisation selon la revendication 4, caractérisé en ce que lesdits moyens (26, 27) sont des moyens de débordement.

6. Dispositif de pasteurisation selon la revendication 4, caractérisé en ce que lesdits moyens (26, 27) sont des moyens d'écoulement libérables par vannes(s).

7. Dispositif de pasteurisation selon l'une des revendications 2 à 6, caractérisé en ce que ledit tube distributeur commun (4) et ledit collecteur commun (20) comportent chacun un même nombre de vannes, de rang 1 à n, et en ce qu'il est équipé de moyens permettant de commander simultanément et de la même manière (ouverte et fermée) les deux vannes de même rang (1, ou 2, ou..., ou n) sur le tube distributeur d'une part et sur le collecteur d'autre, part, de manière que les portions successives du tube distributeur d'une part et les portions successives du collecteur d'autre part aient les mêmes positions et dimensions relatives sur le tube distributeur et sur le collecteur.

8. Dispositif de pasteurisation selon la revendication 7, caractérisé en ce que les intervalles entre deux vannes successives sur le distributeur sont de longueurs égales à ceux qui leurs correspondent entre deux vannes successives de mêmes rangs sur le collecteur, de sorte que les portions successives du tube distributeur ont toujours les mêmes longueurs que celles qui leur correspondent sur le collecteur.

## Claims

1. Pasteurization apparatus for foodstuffs contained in receptacles (2) which are passed through a pasteurization tunnel in which are normally produced, successively, a heating stage producing a steady increase of temperature during which preheating takes place, then accelerated heating in a so-called pasteurization zone, then a stage of maintenance at uniform temperature in a so-called pasteurization zone, and finally a stage of cooling in a cooling zone, the said pasteurization tunnel being equipped with sprayer tubes (3) to spray the receptacles with a spraying liquid at a temperature specified for each sprayer tube or group of successive sprayer tubes, the temperature of the spraying liquid defining the stage or zone of preheating, prepasteurization, pasteurization or cooling, and also being equipped with a device for recovering and re-cycling the spraying liquid from each sprayer tube or group of successive sprayer tubes having the same spraying temperature, characterized in that the successive sprayer tubes (3) that together define the successive zones of prepasteurization, pasteurization and possibly of the start of the cooling zone are each supplied with spraying liquid by at least one common distributor tube (4) or equivalent, extending in the direction of movement of the receptacles, the said common distributor tube being provided with valves (15) operating on an on-or-off basis and remotely controllable, making it possible to isolate between successive valves successive portions of the distributor tube each of which supplies at least one spraying tube (3), and making it possible to supply this distributor tube with liquid at prepasteurization temperature at its up-stream end, with liquid at cooling temperature at its down-stream end, and with liquid at pasteurization temperature at one or more central portions selectable by supply valves (15) in such a way as to be able to vary, in size and position, the pasteurization zone (17) between the prepasteurization zone (16) and cooling zone (18), by varying the closing and opening of the said valves.

2. Pasteurization apparatus according to Claim 1, characterized in that it comprises, for each of the zones (16, 17. 18) supplied by the said common distributor tube, a liquid reservoir (7, 11, 9) at the spraying temperature for the associated zone, and in that it comprises an appliance (19, 20) for the recovery of the spraying liquid supplied by each of the said portions of distributor tube, also comprising at least one common collector (20), tubular or equivalent extending in the direction of advance of the receptacles, the said common collector being, in the same way as the distributor tube, provided with valves (21) operating on an on-or-off basis and remotely controllable, making it possible to divide. according to the initial spraying temperatures of the recovered liquids, the said collector into successive portions each corresponding to the recovered liquid obtained from the spraying tubes of each zone, and in that it is equipped with means (22 to 27) enabling the liquids recovered in these successive portions to be directed respectively towards the said reservoir of liquid (7, 11, 9) at the spraying temperature for the corresponding zone.

3. Pasteurization apparatus according to Claim 2, characterized in that the spraying liquid supplied by each of the said spraying tubes relative to the said portions of distributor tubes is recovered by transverse gutters (19), or the equivalent, placed below the receptacles (2, from each of which gutters it flows by gravity into one of the said portions of the said common collector tube.

4. Pasteurization apparatus according to Claim 2 or 3 characterized in that the liquid recovered in the upstream portion of the said collector (20) flows by its up-stream extremity towards the reservoir (7) for the prepasteurization zone, in that the liquid recovered in the down-stream portion of the said collector flows by its down-stream extremity towards the reservoir (9) for the said start of the cooling zone, and in that the central portion is equipped with means (26.27) enabling the liquid recovered in it to be directed towards the reservoir (11) for the pasteurization zone.

5. Pasteurization apparatus according to Claim 4, characterized in that the said means (26,27) are overflow means.

6. Pasteurization apparatus according to Claim 4, characterized in that the said means (26,27) are means of flow releasable by valves(s).

7. Pasteurization apparatus according to one of Claims 2 to 6, characterized in that the said common distributor tube (4) and the said common collector (20) each comprise an equal number of valves, numbered 1 to n, and in that it is equipped with means enabling the two valves having the same number (1, or 2, or..., or n) to be controlled simultaneously and in the same manner (open and closed) on the distributor tube on one hand and on the collector on the other hand, in such a way that the successive portions of the distributor tube on one hand and the successive portions of the collector on the other hand have the same positions and relative dimensions on the distributor tube and on the collector.

8. Pasteurization apparatus according to Claim 7. characterized in that the intervals between two successive valves on the distributor have the same length as those corresponding to them between two successive valves of the same numbering on the collector. so that the successive portions of the distributor tube always have the same lengths as those corresponding to them on the collector.

## Ansprüche

1. Pasteurisierungsvorrichtung für Nahrungsmittel in den Packungen (2), indem sie durch einen Pasteurisierungstunnel hindurchgeführt werden, in dem normalerweise aufeinanderfolgend eine Erwärmungsphase, in der ein gleichmäßiger Temperaturanstieg bewirkt wird, im Laufe dessen sich eine Vorheizung vollzieht, dann eine beschleunigte Erwärmung in einer sogenannten Vorpasteurisierungszone, dann eine Phase der Aufrechterhaltung einer Temperaturstufe in einer sogenannten Pasteurisierungszone und schließlich eine Abkühlungsphase in einer Abkühlungszone ablaufen, wobei dieser Pasteurisierungstunnel mit Rohren (3) versehen ist zum Besprühen der Packungen mittels einer Sprühflüssigkeit mit vorbestimmter Temperatur für jedes Rohr oder jede Gruppe aufeinanderfolgender Rohre, wobei die Temperatur der Sprühflüssigkeit die Phase oder Zone der Vorheizung, der Vorpasteurisierung, der Pasteurisierung oder der Abkühlung vorgibt, und darüberhinaus mit einer Vorrichtung zur Wiedergewinnung und Wiederverwendung der Sprühflüssigkeit aus jedem Rohr oder jeder Gruppe von aufeinanderfolgenden Rohren mit gleicher Sprühtemperatur versehen ist, dadurch gekennzeichnet, daß die aufeinanderfolgenden Rohre (3) zum Besprühen, die in ihrer Gesamtheit die aufeinanderfolgenden Zonen der Vorpasteurisierung, Pasteurisierung und gegebenenfalls des Beginns der Abkühlungszone vorgeben, alle mit Sprühflüssigkeit über wenigstens einen gemeinsamen Rohrverteiler (4) o.dgl. versorgt sind, der sich in der Fortbewegungsrichtung der Packungen erstreckt, wobei dieser gemeinsame Rohrverteiler mit Schiebern (15) versehen ist, die im Auf-Zu-Betrieb arbeiten und fernsteuerbar sind und zwischen aufeinanderfolgenden Schiebern die Trennung von aufeinanderfolgenden Abschnitten des Rohrverteilers ermöglichen, die jeweils wenigstens ein Sprührohr (3) versorgen, wobei dieser Rohrverteiler mit die Vorpasteurisierungstemperatur aufweisender Flüssigkeit an seinem stromaufwärtsseitigen Ende, mit die Abkühltemperatur aufweisender Flüssigkeit an seinem stromabwärtsseitigen Ende und mit die Pasteurisierungstemperatur aufweisender Flüssigkeit an einem oder mehreren mittleren Abschnitten versorgbar ist, die durch Versorgungsschieber (15) auswählbar sind, damit die Pasteurisierungszone (17) zwischen den Zonen der Vorpasteuerisierung (16) und der Abkühlung (18) in Größe und Position durch Öffnen und Schließen der genannten Schieber verstellt werden kann.

2. Pasteurisierungsvorrichtung nach Anspruch 1, dadurch gekennzeichnet, daß sie für jede der durch den genannten gemeinsamen Rohrverteiler versorgten Zonen (16, 17, 18) ein die Sprühtemperatur für die zugeordnete Zone aufweisendes Flüssigkeitsreservoir (7, 11, 9) enthält, und daß sie eine Vorrichtung (19, 20) zur Wiedergewinnung der Sprühflüssigkeit aus jedem der genannten Abschnitte des Rohrverteilers aufweist, die auch wenigstens einen gemeinsamen rohrförmigen o.dgl. Sammler (20) enthält und sich in der Fortbewegungsrichtung der Packungen erstreckt, wobei dieser gemeinsame Sammler in gleicher Weise wie der Rohrverteiler mit Schiebern (21) versehen ist, die im Auf-Zu-Betrieb arbeiten und fernsteuerbar sind sowie das Auftrennen des besagten Sammlers in Abhängigkeit der ursprünglichen Sprühtemperatur der wiedergewonnenen Flüssigkeiten in aufeinanderfolgende Bereiche ermöglichen, von denen jeder einer aus den Rohren jeder Zone wiedergewonnenen Flüssigkeit entspricht, und daß sie mit Mitteln (22 - 27) zum Zuführen der aufgefangenen Flüssigkeit jeweils in diese aufeinanderfolgenden Abschnitte zum besagten Flüssigkeitsreservoir (7, 11, 9) bei einer Sprühtemperatur für die entsprechenden Zone versehen ist.

3. Pasteurisierungsvorrichtung nach Anspruch 2, dadurch gekennzeichnet, daß die Sprühflüssigkeit aus jedem der genannten Rohre bezogen auf die genannten Abschnitte des Rohrverteilers durch transversale Rinnen (19) o.dgl. aufgefangen wird, die unter den Packungen (2) angeordnet sind und von jeder derselben durch Schwerkrafteinfluß in einen der genannten Abschnitte des genannten gemeinsamen Rohrsammlers abfließt.

4. Pasteurisierungsvorrichtung nach Anspruch 2 oder 3, dadurch gekennzeichnet, daß die in dem stromaufwärtsseitigen Bereich des genannten Sammlers (2) aufgefangene Flüssigkeit über dessen stromaufwärtsseitiges Ende zum Reservoir (7) für die Vorpasteurisierungsphase abfließt, daß die in dem stromabwärtsseitigen Bereich des genannten Sammlers aufgefangene Flüssigkeit über dessen stromabwärtsseitiges Ende zum Reservoir (7) für den genannten Anfang der Abkühlzone abfließt, und daß der mittlere Bereich mit Mitteln (26, 27) zum Leiten der aufgefangenen Flüssigkeit in diesen über das Reservoir (11) für die Pasteurisierungszone versehen ist.

5. Pasteurisierungsvorrichtung nach Anspruch 4, dadurch gekennzeichnet, daß die genannten Mittel (26, 27) überlaufmittel sind.

6. Pasteurisierungsvorrichtung nach Anspruch 4, dadurch gekennzeichnet, daß die genannten Mittel (26, 27) durch Schieber freigebbare Abfließmittel sind.

7. Pasteurisierungsvorrichtung nach einem der Ansprüche 2 bis 6, dadurch gekennzeichnet, daß der genannte gemeinsame Rohrverteiler (4) und der genannte gemeinsame Sammler (20) jeweils dieselbe Anzahl von Schiebern der Rangstufe 1 bis n aufweist, und daß sie mit Mitteln zur simultanen und gleichartigen (auf und zu) Steuerung der beiden Schieber derselben Rangstufe (1, oder 2, oder..., oder n) am Rohrverteiler einerseits und am Sammler andererseits versehen ist, damit die aufeinanderfolgenden Bereiche des Rohrverteilers einerseits und die aufeinanderfolgenden Bereiche des Sammlers andererseits dieselben Positionen und Ausdehnungen relativ zueinander am Rohrverteiler und am Sammler aufweisen.

8. Pasteurisierungsvorrichtung nach Anspruch 7, dadurch gekennzeichnet, daß die Zwischenräume zwischen zwei aufeinanderfolgenden Schiebern am Verteiler dieselbe Länge aufweisen, wie die ihnen entsprechenden Intervalle zwischen zwei aufeinanderfolgenden Schiebern derselben Rangstufe am Sammler, so daß die aufeinanderfolgenden Bereiche des Rohrverteilers immer dieselbe Länge aufweisen wie die ihnen entsprechenden Bereiche am Sammler.

FIG.1

EP 0 239 708 B1

FIG.2

FIG.3

EP 0 239 708 B1

FIG.4